# EUROPEAN PATENT APPLICATION

(11) **EP 1 852 466 A1**
(43) Date of publication of application: **07.11.2007**
(21) Application number: 06113563.8
(22) Date of filing: 05.05.2006
(51) Int. Cl.: C08L 1/00, C08L 97/00

(54) **Polymeric material of photosynthetic origin comprising particulate inorganic material**

(71) Applicant: BIOeCON International Holding N.V., Curaçao (AN)
(72) Inventor: O'Connor, Paul, 3871 KM, Hoevelaken (NL)
(74) Representative: Rasser, Jacobus Cornelis

(57) **Abstract**

Disclosed is a new composition of matter comprising a polymeric material of photosynthetic origin having embedded therein small particles of an inorganic material. The composition of matter is particularly suitable for use in processes whereby the polyaneric material is converted to fuels in liquid or gas form, and/or to the valuable specialty chemicals.

In a specific embodiment, the polymeric material comprises biomass. More specifically, the polymeric material comprises cellulose or lignocellulose.

## Description

### BACKGROUND OF THE INVENTION

### 1. Field of the Invention

The present invention relates to a new composition of matter comprising a polymeric material of photosynthetic origin having embedded therein small particles of an inorganic material.

The composition of matter is particularly suitable for use in processes whereby the polymeric material is converted to fuels in liquid or gas form, and/or to the valuable specialty chemicals.

In a specific embodiment, the polymeric material comprises biomass. More specifically, the polymeric material comprises cellulose or lignocellulose.

### 2. Description of the Related Art

Polymeric materials of photosynthetic origin are produced in large volumes in agriculture and forestry. Many of these materials are intended for use as food products for human consumption, in animal feed, or other forms of valuable materials. For example, forestry products are used as construction materials in the form of lumber, plywood, paper and paper products and paper byproducts and the like.

Incidental to the production of agricultural and forestry products, the world produces vast quantities of agricultural and forestry waste. Examples include wood chips, saw dust, straw, corn husks, bagasse, and the like. Attempts have been made to convert these waste materials to useful products. In general, these waste materials are converted to products of low intrinsic value, such as compost. Attempts to convert these materials to products of a higher value have met with limited success. For example, conversion of agricultural waste to ethanol by fermentation is a time-consuming and expensive process. Moreover, even the most sophisticated fermentation enzymes are only able to convert at most about 50 percent of the available material. The remaining 50 percent is immune to attack by fermentation enzymes and is sometimes referred to as "recalcitrant cellulose" for this reason.

It is an object of the present invention to provide a new composition of matter that can be made from agricultural or forestry products, or waste materials from agriculture and forestry, and that is more easily converted to liquid or gaseous fuel or to specialty chemicals than the waste materials from which it is derived.

### BRIEF SUMMARY OF THE INVENTION

The present invention relates to a composition of matter comprising a polymeric material of photosynthetic origin having embedded therein small particles of an inorganic material.

In a specific embodiment, the polymeric material comprises biomass. More specifically, the polymeric material comprises cellulose or lignocellulose.

The inorganic material may be inert, for example a salt of an alkali metal or earth alkaline metal. In an alternate embodiment, the inorganic material may have catalytic activity. Examples include clays, silicas, silica aluminas, zeolites, anionic clays, cationic layered materials, metal hydroxyl salts and the like.

### DESCRIPTION OF ILLUSTRATIVE EMBODIMENTS

The following is a description of certain embodiments of the invention, given by way of example only.

The present invention is based on the discovery that certain polymeric materials of photosynthetic origin can be made more susceptible to defibrillation, pillaring and depolymerization by converting them to a new composition of matter comprising the polymeric materials and having embedded therein small particles of an inorganic material.

Preferred for use in the present invention are polymeric materials comprising biomass, in particular polymeric materials comprising cellulose or lignocellulose.

The term biomass, as used herein, is a material of plant origin, preferably containing a significant amount of cellulose and or lignocellulose. In general, biomass is a material produced by the photosynthetic conversion in plants of carbon dioxide and water under the influence of solar energy. The plants that are the origin of the biomass may be land-based or may be aquatic plants. Examples of land-based plants producing significant amounts of biomass include cereal grains (including corn), grasses, sugar cane, trees, and the like. Examples of aquatic plants producing biomass include algae, seaweed, and the like.

In a preferred embodiment, the inorganic material is present in a crystalline or quasi-crystalline form.

The inorganic material may be an inert material, or it may be a material having catalytic properties. Examples of inert materials include inorganic salts, in particular the salts of alkali and earth alkaline metals. Although these materials do not contribute to a subsequent chemical conversion of the polymeric material, it is believed that the formation of discrete particles of these materials within the biomass works as a wedge and results in a mechanical breakup or opening of the structure of the biomass. As a result of this opening of the structure, the biomass particles become more accessible to microorganisms and or chemicals used in the subsequent conversion. This mechanical wedge effect is particularly strong if the particles are in crystalline or quasi-crystalline form.

In a preferred embodiment, the inorganic particles have catalytic properties. These materials provide a mechanical breakup, similar to inert inorganic materials. In addition, these materials provide catalytic properties that accelerate the subsequent selective chemical conversion of the polymeric material. By being embedded in the polymeric material, the catalytic particles are in intimate contact with the polymeric material to be converted. Accordingly, the catalytic effect is enhanced as compared to a simple mechanical mixture of the polymeric material with catalytic particles.

Examples of inorganic materials having catalytic properties include refractory oxides, in particular alumina; silicas, silica aluminas clays; zeolites; and ionic clays; cationic layered materials; LDHs; smectites; saponites; sepiolites; metal hydroxyl salts and the like. It will be understood that mixtures of these materials may also be used.

The inorganic particles embedded in the polymeric materials generally have an average particle size in the range of from 5 micrometers to 10 nanometers, preferably in the range of from 500 to 50 nanometers.

In general, the compositions of matter of the present invention may be prepared as fallows:
a. contacting a polymeric material of photosynthetic origin with a solution of precursor material to the inorganic particles in a suitable solvent under conditions permitting the solution to penetrate the polymeric material;
b. allowing the solution to penetrate the polymeric material;
c. modifying the conditions to cause the formation of inorganic particulate material from the precursor material.

The term "precursor material to the inorganic particles" as used herein means a material that is soluble in a suitable solvent and that can be converted to the inorganic particles. This term includes the inorganic material *per se* in a solution, such that inorganic particles may be formed by precipitation and or crystallization. The term also includes solutions of materials that may be converted to inorganic particles by chemical reaction. For example, alumina may be formed by reacting a soluble aluminum salt with a source of hydroxyl ions, or an acid salt (like alumina sulfate) with a basic salt (like sodium aluminate)

A suitable solvent is any solvent that dissolves the precursor material and that is compatible with the desired subsequent conversion of the precursor material to the inorganic particles. Water is an example of such a suitable solvent, and is in many cases preferred because of its low-cost and its ease of handling and its high safety. However, other solvents may be preferred for their specific properties. For example, lower alcohols such as methanol and ethanol have a much lower heat of evaporation than water and may therefore be preferred under certain circumstances. Such solvents may be relatively abundant, which lowers their costs. For example, ethanol is produced in large quantities from sugar. As a result, sugar plantations may have ethanol available at a relatively low-cost. Other solvents may be produced as a byproduct in the subsequent treatment of the biomass. Examples include phenols, other alcohols, and carboxylic acids. These solvents will be abundantly available at the site where conversion of biomass takes place, which makes them a desirable solvent for use in the present invention.

To aid penetration of the solvent, a swelling agent may be added. Suitable swelling agents include bases and acids.

In general, it is desirable to provide a high concentration of precursor material in the solution. Care should be taken however to avoid premature precipitation of its inorganic material. Therefore, it is advantageous to utilize concentrations that are near, but safely below, the saturation concentration of the precursor material in the solvent.

The solution comprising the precursor to the inorganic particles is contacted with the polymeric material of photosynthetic origin. To ensure an intimate contact of the solution with the polymeric material, it is preferred to provide the polymeric material in a small particles size. Preferably, the polymeric material is presented in the form of particles having an average particles size of less than 1 mm, more preferably less than 100 micrometers, even more preferably less than 50 micrometers. The particles may be as small as one micrometer, but it is in general not necessary to provide particles smaller than about 10 micrometers. Processes for reducing the size of biomass particles, which are relatively soft, are well-known and are not part of the present invention.

After contacting the biomass particles with the solution containing the precursor to the inorganic particles, the solution is allowed to penetrate the biomass particles. The time required for this penetration depends on the average particle size of the biomass particles, the viscosity of the precursor solution, the specific solvent used, the water content of the biomass particles, and the temperature at which the penetration takes place. In general, the penetration can be accelerated by slowly agitating the mixture of biomass particles and precursor solution and/or by raising the temperature. Typically, the penetration time ranges from several minutes to several hours.

The biomass particles may be contacted with a solvent (for instance water) prior to the introduction of the inorganic additives. Said pre-treatment may contain an acid or a base.

After the solution has been allowed to penetrate the biomass particles, it may be desirable to drain off any excess solution, in particular if evaporation of the solvent is involved in the precipitation/crystallization step. It is preferable, however, to use an amount of solution of solution such that virtually all of it is soaked up by the biomass particles. In this way, maximum penetration is achieved, while the need for drain off excess solution is avoided.

In the next step, the conditions are changed such as to initiate precipitation or crystallization of the inorganic material within the particles of polymeric material. Depending on the type of inorganic material, precipitation or crystallization may be initiated by (partially) evaporating the solvent; by changing the pH; by changing the temperature; or by a combination of these measures. For example, crystallization of an alkali metal salt or an earth alkali metal salt may be triggered by evaporation of the solvent, or by a lowering of the temperature. By way of other example, an insoluble hydroxide may be formed by raising the pH of a solution of the appropriate metal cation.

A specific class of materials according to present invention are polymeric materials of photosynthetic origin having embedded therein small particles of inorganic materials. Examples of suitable inorganic materials include metal hydroxides, metal salts and inorganic in-situ formed compounds, alumina, zirconia, titania, silica, and alumina silica. Alumina is preferred.

A method for preparing a cellulose-containing polymeric material having embedded therein microcrystalline particles of an inorganic material, said method comprising the steps of

a. providing a cellulose-containing polymeric material, such as biomass;
b. providing an aqueous solution of the cation of a metal capable of forming a particulate inorganic compound;
c. soaking the cellulose polymeric material with the aqueous solution;
d. initiating precipitation of a precursor to a refractory oxide particulate inorganic compound;
e. aging to convert the precursor to the particulate inorganic compound.

This method is particularly suitable for embedding oxides, such as alumin, silica, silica-alumina, and the like.

The preparation of such materials is exemplified herein for alumina containing materials. The skilled person will be able to make the necessary adjustments to prepare materials containing other particulate inorganic compounds.

Cellulose containing material, such as biomass, is ground to a particles size of about 50 micrometers. The material is contacted with an aqueous solution of an aluminum source. The aluminum may be present in the form of Al³⁺, as in AlCl₃, or as an aluminate, for example sodium aluminate. The aqueous solution is allowed to penetrate the biomass particles during about 30 minutes. After the penetration step, if an acid aluminum salt is used, the pH of the solution is raised to about 10 by adding a base. The basic solution is allowed to penetrate the biomass particles during about 30 minutes. The resulting slurry is then aged at elevated temperature for several hours, after which excess liquid is drained off and the biomass particles are dried. X-ray diffraction confirms the presence of crystalline alumina. In case a basic aluminum salt is used, precipitation may be triggered by lowering the pH by addition of an acid.

Another specific class of materials according to the present invention are polymeric materials of photosynthetic origin having embedded therein small particles of a mixed oxide a divalent metal and a trivalent metal. The preparation of these materials is similar to that described hereinabove for alumina containing polymeric materials, as follows:

A method for preparing a cellulose-containing polymeric material having embedded therein microcrystalline particles of an inorganic material, said method comprising the steps of:
a. providing a cellulose-containing polymeric material, such as biomass;
b. providing an aqueous solution of a divalent metal and a trivalent metal;
c. soaking the cellulose polymeric material with the aqueous solution;
d. initiating precipitation of a crystalline inorganic material;

The aqueous solution of the divalent and the trivalent metal may be provided by dissolving a soluble salt. It is also possible to dissolve metal ions by subjecting an insoluble material containing the desired metal to electrolysis. An example is subjecting a clay suspension to electrolysis to dissolve metal ions contained in the clay. The electrolysis is preferably carried out in the presence of the polymeric material in which the metal is to become embedded.

The method will be illustrated herein with the preparation of biomass particles having embedded therein small particles of hydrotalcite. The skilled person will be able to modify the conditions for preparing other particulate inorganic compounds, including hydrotalcite-like anionic clays and metal hydroxyl salts.

Biomass particles of about 50 micrometers in diameter are soaked with an aqueous solution comprising aluminum ions and magnesium ions. The aqueous solution is allowed to penetrate the biomass particles for about 45 minutes. After penetration, the pH is raised to about 9 by the addition of a base. The base solution is allowed to penetrate for about 30 minutes. The particles are then aged at elevated temperature for about three hours. X-ray diffraction confirms the presence af hydrotalcite crystals.

Another embodiment involves the pre-treatment of the biomass particle with a base or an acidic solution before the inorganic additive is introduced or formed.

The materials of the present invention are particularly suitable for conversion to liquid or gaseous fuels, or as a source of valuable specialty chemicals. The presence of the inorganic particles embedded within the polymeric material makes the polymeric material more susceptible to conversion than the corresponding unmodified polymeric material.

A specific example of conversion of a material of the present invention involves fermentation of cellulose or lignocellulose present in the polymeric material. In its untreated form, the polymeric material contains large amounts, typically about 50 percent, of cellulose that is not accessible to the microorganisms used for the fermentation reaction. This fraction of the cellulose is referred to as recalcitrant cellulose. As a result of the small inorganic particles embedded in the biomass, a greater fraction of the available cellulose is accessible to the microorganisms used for the fermentation reaction. In other words, the amount of recalcitrant cellulose is reduced as result of the presence of the inorganic particles. Consequently, the yield of the fermentation reaction is increased, and the production of unfermentable cellulosic byproduct is reduced, and in some cases all but eliminated.

Conversion of the materials of the present invention may also be accomplished by hydrothermal treatment. Because of the presence of the inorganic particles, such hydrothermal treatment may be carried out at conditions that are milder than are typically used for conversion of biomass to bio-oil. The hydrothermal treatment may result in a certain degree of defibrillation of the biomass, in combination with a certain degree of hydrolysis of the polymers present in the biomass.

In addition to being suitable as an intermediate material in the preparation of a bio-oil, the materials may be used for other purposes, for example as a binder or as a construction material.

**Example 1**

**A. Sepiolite**

A polymeric material having embedded therein small particles of Sepiolite clay is prepared as follows.

### Step 1:

A suspension of partly dissolved Sepiolite clay is produced by slurrying the clay with an aqueous solution of hydrochloric acid.

### Step 2:

Subsequently this suspension is contacted and mixed with wood particles having a particle size distribution in the range of from 1 micrometer to 100 micrometers. The particles are thoroughly soaked in the suspension of Step 1 for about 60 minutes.

### Step 3:

Next the pH of the suspension formed in Step 2 is increased by the addition of NaOH. As a result, part of the dissolved Sepiolite clay re-crystallizes in the interior of the solid biomass. The presence of the crystalline clay particles is confirmed with X-ray diffraction and microscopy (SEM/TEM).

The example is repeated using sulfuric acid, nitric acid, acetic acid and formic acid, respectively, for dissolving or partly dissolving the clay in step 1. Similar results are obtained.

The example is repeated using KOH, NH₄OH, and urea, respectively, for increasing the pH in step 3. Similar results are obtained.

The example is repeated, except that the pH change in step 3 is accomplished by adding further amounts of clay. Similar results are obtained.

The polymeric material having embedded therein clay particles is gently heated in an autoclave at 180 °C and autogenous pressure for about 30 minutes. A bio-oil rich in oxygen-containing organic compounds is obtained.

### B. Hydrotalcite.

The above experiment is repeated, but using hydrotalcite instead of sepiolite clay. The resulting material comprises wood particles having embedded therein small particles of hydrotalcite.

The example is repeated, except that the hydrothermal treatment of step 3 is carried out at 140 and 220 °C, respectively.

### Example 2

### Step 1:

A solution of MgCl₂ is prepared by dissolving MgCl₂ in water.

### Step 2:

Subsequently this solution is contacted and mixed with straw particles. The particles are thoroughly soaked with the solution of Step 1 for 30 minutes.

### Step 3:

Next the pH of the suspension formed in Step 2 is increased, by the addition of NaOH. As a result, part of the Mg re-crystallizes in the form of MgO and Mg(OH)₂ in the interior of the solid biomass. The presence of crystalline particles is confirmed by X-ray diffraction and microscopy (SEM/TEM).

The example is repeated with biomass particles obtained from wood, corn husks, bagasse, and algae, respectively. Similar results are obtained.

### Example 3

### Step 1:

A solution of MgCl₂ is prepared by reacting Mg(OH)₂ with an aqueous solution of HCl.

### Step 2:

Subsequently this solution is contacted and mixed with solid organic biomass particles. The particles are thoroughly soaked with the solution of Step 1. The uptake of moisture is monitored by measuring the loss on ignition (LOI) of the soaked particles and by chemical analysis, monitoring the concentration of the inorganic material in the solution. The soaking is considered completed when no significant change is recorded in the measured LOI after a 10-minute interval. Base is added to cause precipitation of the Mg.

### Step 3:

Next the suspension formed in Step 2 is partly dried. As a result, part of the Mg re-crystallizes in the form of MgO and Mg(OH)₂ in the interior of the solid biomass. The presence of crystalline material is confirmed with X-ray diffraction and microscopy (SEM/TEM).

### Step 4:

The material produced under Step 3 is heated under atmospheric conditions to a temperature of 250 °C. Part of the solid biomass is converted to a liquid biomass (bio-oil).

### Step 5:

The liquid bio-oil produced in Step 4 is separated from the residual solid. The residual solid biomass is burned off. The heat energy produced is used for the hydrothermal treatment of additional Mg-containing biomass. The ashes, which are rich in MgO, are dissolved in dilute acid, and re-used in Step 1.

The example is repeated, except that the hydrothermal treatment of step 4 is carried out at 200, 300, and 400 °C, respectively.

The example is repeated at 200, 300 and 400 °C and autogenic pressure.
The conversion of Mg-containing biomass to bio-oil proceeds more rapidly than that of untreated biomass. The conversion of solid biomass to bio-oil increases with increasing temperature and increasing pressure.

### Example 4

### Step 1:

A solution of FeCl₃ is prepared by dissolving FeCl₃ in water.

### Step 2:

Subsequently this solution is contacted and mixed with a solid organic biomass comprised of wood and/or straw particles. The particles are thoroughly soaked with the solution of Step 1 until no further solution is absorbed, as determined by LOI and by chemical analysis, monitoring the concentration of the inorganic material in the solution (see Example 3).

### Step 3:

Next, the pH of the suspension formed in Step 2 is increased, by the addition of NaOH. As a result, part of the Fe re-crystallizes in the form of Fe₂O₃ and Fe(OH)₃ in the interior of the solid biomass. The presence of crystalline material is confirmed by X-ray diffraction and microscopy (SEM/TEM).

### Step 4:

The material produced under Step 3 is subjected to hydrothermal treatment as described in Example 3, leading to the conversion of part of the solid biomass to a liquid biomass (bio-oil).

### Step 5:

The liquid bio-oil as produced in Step 4 is separated from the solid. The residual solid biomass is burned off, and the heat energy produced is used for hydrothermal treatment of additional Fe-containing biomass. The ashes, which are rich in Fe₂O₃, are dissolved in acid and recycled to Step 1.

Thus, the invention has been described by reference to certain embodiments discussed above. It will be recognized that these embodiments are susceptible to various modifications and alternative forms well known to those of skill in the art

Many modifications in addition to those described above may be made to the compositions described herein without departing from the spirit and scope of the invention. Accordingly, although specific embodiments have been described, these are examples only and are not limiting upon the scope of the invention.

## Claims

**1.** A composition of matter comprising a polymeric material of photo synthetic origin having embedded therein small particles of an inorganic material.

**2.** The composition of matter of claim 1 wherein the inorganic material is in crystalline or quasi-crystalline form.

**3.** The composition of matter of any one of the preceding claims, wherein the polymeric material comprises biomass.

**4.** The composition of matter of claim 3, wherein the polymeric material comprises cellulose or lignocellulose.

**5.** The composition of any one of the preceding claims wherein the particles of inorganic material have an average particle size in the range of from 5 micrometers to 10 nanometers, preferably from 500 to 50 nanometers.

**6.** The composition of any one of the preceding claims wherein the inorganic material is an inert inorganic material.

**7.** The composition of any one of claims 1-5, wherein the inorganic material has catalytic properties.

**8.** The composition of claim 7 wherein the inorganic material is selected from clays, silicas, silica-aluminas, transition metal hydroxides, metal hydroxyl salts, zeolites, cationic layered materials, anionic clays, LDHs, smectite clays, saponites, sepiolites and mixtures thereof.

**9.** A method for preparing a polymeric material having embedded therein small particles of an inorganic material comprising the steps of:
a. contacting a polymeric material of photosynthetic origin with a solution of precursor material to the inorganic particles in a suitable solvent under conditions permitting the solution to penetrate the polymeric material;
b. allowing the solution to penetrate the polymeric material;
c. modifying the conditions to cause the formation of inorganic particulate material from the precursor material.

**10.** The method of claim 9 wherein the polymeric material is biomass.

**11.** The method of claim 9 or 10 wherein the solvent comprises water.

**12.** The method of claims 9-11 wherein the solvent comprises an alcohol.

**13.** The method of claims 9-12 wherein the solvent comprises a carboxylic acid.

**14.** The method of claim 9 or 11 wherein the solvent further comprises a swelling agent.

**15.** The method of claim 14 wherein the swelling agent is an acid or a base.

**16.** The method of any one of claims 9-15, wherein the modification of conditions in step c) comprises a change in temperature, a change in pH, evaporation of the solvent, or a combination thereof.

**17.** The method of any one of claims 9-16, wherein the polymeric material comprises cellulose and/or lignocellulose.

**18.** The method of any one of claims 9-17, wherein the inorganic material is in crystalline or quasi-crystalline form.

**19.** A method for preparing a cellulose-containing polymeric material having embedded therein microcrystalline particles of an inorganic material, said method comprising the steps of
a. providing a cellulose-containing polymeric material, such as biomass;
b. providing an aqueous solution of a divalent metal and a trivalent metal;
c. soaking the cellulose polymeric material with the aqueous solution;
d. initiating precipitation of a crystalline inorganic material.

**20.** The method of claim 19 wherein the divalent metal is Mg.

**21.** The method of claim 19 or 20 wherein the trivalent metal is Al.

**22.** The method of claim 19 wherein the microcrystalline inorganic material is an anionic clay.

**23.** The method of claim 21 wherein the anionic clay is hydrotalcite.

**24.** A method for preparing a cellulose-containing polymeric material having embedded therein microcrystalline particles of an inorganic material, said method comprising the steps of
a. providing a cellulose-containing polymeric material, such as biomass;
b. providing an aqueous solution of a cation or anion of a metal capable of forming a particulate inorganic compound;
c. soaking the cellulose polymeric material with the aqueous solution;
d. initiating precipitation of a precursor to a particulate inorganic compound;
e. aging to convert the precursor to the particulate inorganic compound.

**24.** The process of claim 23 wherein the cation of step b. is Al³⁺.

**25.** The process of claim 23 wherein the anion is Al₂O₄²⁻.

**26.** The composition of any one of claims 1 - 8 for use in the preparation of a bio-oil.

**27.** The composition of any one of claims 1- 8 for use as a binder.

**28.** The composition of any one of claims 1 - 8 for use as a construction material.
